# EUROPÄISCHE PATENTSCHRIFT

(11) **EP 3 911 501 B1**
(45) Veröffentlichungstag und Bekanntmachung des Hinweises auf die Patenterteilung: **16.08.2023**
(21) Anmeldenummer: 20702581.8
(22) Anmeldetag: 20.01.2020
(51) Int. Cl.: B29D 30/72, B23K 26/40, B29D 30/00

(54) **VORRICHTUNG UND VERFAHREN ZUM MARKIEREN VON REIFEN MITTELS LASERSTRAHLEN**
APPARATUS AND METHOD FOR MARKING TYRES WITH LASERBEAMS
APPAREIL ET PROCÉDÉ DE MARQUAGE DE PNEUS UTILISANT DES FAISCEAUX LASER

(30) Priorität: 18.01.2019 DE 102019101339
(43) Veröffentlichungstag der Anmeldung: 24.11.2021
(73) Patentinhaber: Dengler, Stefan, 75365 Calw-Stammheim (DE)
(72) Erfinder: Dengler, Stefan, 75365 Calw-Stammheim (DE)
(74) Vertreter: Flügel Preissner Schober Seidel
(86) Internationale Anmeldenummer: PCT/EP2020/051243
(87) Internationale Veröffentlichungsnummer: WO 2020/148455

(56) Entgegenhaltungen:
- EP-A1- 2 792 474
- DE-A1-102007 028 933
- DE-A1-102013 102 296
- DE-A1-102015 217 632
- DE-U1- 20 310 931
- DE-U1-202005 000 640
- US-A- 5 478 426
- US-A1- 2006 151 451
- US-A1- 2013 128 029

## Beschreibung

Die Erfindung betrifft eine Vorrichtung zum Markieren von Reifen mittels Laserstrahlen und ein Verfahren zum Markieren von Reifen.

Bekannt ist es, Reifen mit Hilfe von Laserstrahlen mit einer oder mehreren Markierungen zu versehen. Bei der Markierung handelt es sich insbesondere um eine Schrift, eine Kennzeichnung, eine Grafik oder einen Strich- oder Matrixcode, wie er beispielsweise aus DE 20 2015 009 105 U1 bekannt ist.

Eine Einrichtung zum Anbringen von derartigen Markierungen oder Beschriftungen an Reifen, die zudem eine Bildaufnahmeeinheit zum Erfassen des zu markierenden Reifens aufweist, offenbart DE 198 22 323 C2.

Ein System zum Markieren eines Fahrzeugreifens wird außerdem in EP 1 636 117 B1 beschrieben. Das System umfasst eine Steuereinheit, eine Lesevorrichtung, welche eine Referenzposition an dem Reifen ermittelt, und einen Laserapplikator, der eine Markierung an dem Reifen anbringt. Der Reifen wird so ausgerichtet, dass der Laserapplikator die Markierung ausgehend von der Referenzposition an einer bestimmten Stelle des Reifens anbringen kann.

Eine weitere Vorrichtung zum Markieren von Reifen wird in WO 2018/224601 A1 beschrieben. Der Reifen wird auf einer Transportvorrichtung grob platziert und anschließend mittels einer Zentriervorrichtung zentriert.

Eine Vorrichtung und ein Verfahren zur Markierung von Reifen mittels eines Lasers wird in US 5 478 426 A beschrieben. Der Laser wird mittels eines Mikroprozessors gesteuert, welcher den Laserstrahl positioniert und ausrichtet. Der Reifen kann auf einer Welle gelagert sein, die den Reifen um eine zentrale Achse dreht.

Ein Verfahren zur Bestimmung der Position zum Anbringen eines Kennzeichens an einem Reifen mittels eines Laserschreibkopfes wird in DE 10 2007 028 933 A1. Zur exakten Bestimmung der Winkelposition des Kennzeichens wird die Reifenseitenwand nach dem Lichtschnittverfahren mit einem Laser vermessen, der mittels einer Aufweitungsoptik eine Lichtlinie auf die Seitenwandoberfläche projiziert. Die Lichtlinie folgt durch Kreisbewegung des Lichtschnittlasers oder durch Reifenrotation der in der Seitenwand gewölbten Oberfläche des Reifens. Eine Kamera bestimmt für jede Zeile des aufgenommenen Bildes die Position der Lichtlinie und überträgt diese an einen Rechner, der die Auswertung der Vermessung durchführt. Die Winkelposition wird durch einen Bildvergleich bestimmt, wobei als Referenz die vorhandene Seitenwandbeschriftung dienen kann. Zusätzlich zur Bestimmung der Winkelposition wird ein an der Reifenseitenwand kreisförmig umlaufendes Element, beispielsweise eine Felgenschutzrippe, vermessen und als Referenz verwendet, um die Position der Reifendrehachse zu bestimmen. Ergibt die Berechnung einen etwaigen Versatz der vorab eingestellten Drehachse des Laserschreibkopfes zur Drehachse des Reifens, wird das Kennzeichen unter Berücksichtigung des Versatzes an der vorgesehenen Position angebracht.

Eine Vorrichtung zur Markierung von Automobilreifen offenbart DE 20 2005 000 640 U1. Mittels eines Greiferpaars wird der Reifen zentriert und anschließend werden mittels eines Lichtschnitt-Sensors, der sich auf einem Schwenkarm befindet, reliefartige Symbole auf der Reifenseitenwand als Höhenprofil aufgenommen.

EP 2 792 474 A1 offenbart eine Vorrichtung zum Bedrucken der Seitenwand eines Reifens. Die Vorrichtung umfasst eine Reifeneinstelleinrichtung, eine Messeinrichtung, eine Bedruckeinrichtung und eine Steuereinrichtung auf. Die Reifeneinstelleinrichtung umfasst eine Reifendreheinheit, die einen unteren und einen oberen Anhebe- und Absenkmechanismus aufweist. Der Reifen wird durch diese luftdicht verschlossen, sodass Luft in den Reifen gepumpt werden kann. Die Messeinrichtung dient dazu, das Oberflächenprofil der Seitenwand des Reifens mittels eines Lasers zu vermessen.

Der Erfindung liegt die Aufgabe zugrunde, eine Vorrichtung und ein Verfahren zum Markieren von Reifen zu schaffen, die eine schnelle und zuverlässige Kennzeichnung der Reifen sicherstellen.

Diese Aufgabe wird durch eine Vorrichtung gemäß Anspruch 1 und ein Verfahren gemäß Anspruch 9 gelöst. Bevorzugte Ausgestaltungen der Erfindung werden in den Ansprüchen 2 bis 8 und 10 bis 15 definiert.

Der Erfindung liegt die Erkenntnis zugrunde, den zu markierenden Reifen mittels einer Haltevorrichtung an einem Wulst des Reifens aufzunehmen und zu halten und damit ein aufwändiges Wenden des Reifens entbehrlich zu machen. Die Haltevorrichtung kann eine Reifenaufnahme, insbesondere eine obere und/oder eine untere Reifenaufnahme, aufweisen und ermöglicht es, den Reifen sowohl in liegender Position als auch in stehender Position zu markieren.

Der Reifen umfasst eine Lauffläche, eine einen ersten Wulst aufweisende erste Seitenwand, die mit der Lauffläche verbunden ist, eine einen zweiten Wulst aufweisende zweite Seitenwand, die mit der Lauffläche verbunden ist, und eine Rollachse.

Ein durch die Haltevorrichtung getragener Reifen übt auf die Haltevorrichtung eine durch seine Schwerkraft bedingte Kraft auf, die eine durch die Haltevorrichtung auf den Reifen ausgeübte Gegenkraft zur Folge hat. Wird ein Reifen durch die Haltevorrichtung gehalten, so bedeutet dies, wenn sich Haltevorrichtung und Reifen nicht oder mit konstanter Geschwindigkeit bewegen, dass sich die durch den Reifen auf die Haltevorrichtung ausgeübte Kraft und die durch die Haltevorrichtung auf den Reifen ausgeübte Gegenkraft gegeneinander aufheben. Mittels der Aufnahme des Reifens an einem seiner Wülste wird ein gleichförmiger Kraftfluss durch den Reifen erzielt und die Krafteinleitung durch die Haltevorrichtung großflächig im Wulst des Reifens verteilt. Der Reifen wird auf diese Weise besonders schonend behandelt, ein Umstand, der insbesondere bei Neureifen von Vorteil ist.

Die Haltevorrichtung ist so ausgestaltet, dass sie ins Innere des Reifens eingebracht wird, insbesondere in einer etwa parallel zu der Rollachse verlaufenden Richtung. Nachdem die Haltevorrichtung an den Wülsten des Reifens angebracht wurde, kann der Reifen angehoben werden. Dies geschieht, indem die Haltevorrichtung angehoben wird. Erfindungsgemäß kann die Haltevorrichtung den zu markierenden Reifen frei im Raum schwebend halten, sodass die Außenseiten der Seitenwände für die Markierung durch die Lasereinrichtung frei zugänglich sind. Erfindungsgemäß ist die Haltevorrichtung dazu ausgebildet, den zu markierenden Reifen, beispielsweise mit Hilfe von Zentrierungsanschlägen, für nachfolgende Prozessschritte zu zentrieren, sodass auf eine zusätzliche Vorrichtung zu diesem Zweck verzichtet werden kann. Das Zentrieren kann ein Positionieren des Reifens in radialer Richtung, insbesondere quer zu einer Prozessrichtung, in welcher die zu markierende Reifen durch die erfindungsgemäße Vorrichtung gefördert werden, und/oder ein Ausrichten der Reifen in ihrer Umfangsrichtung beinhalten.

Zur Positionierung wird mit Hilfe von einer Messeinrichtung (Mustererkennung oder 2D-/3D-Messeinrichtung) die Seitenwand erfasst/digitalisiert, um Merkmale, die am Reifen vorhanden sind, als Referenz zur Positionierung des Markierbereichs zu verwenden. Hierzu wird eine Lasereinheit, die in der Regel einen Laser, insbesondere einen CO₂-Laser, eine Strahlaufweitung, einen Scanner, eine Planfeldoptik, eine Absaugvorrichtung und eine Sicherheitseinrichtung, wie etwa einem Shutter, aufweist, zusammen mit einer Messeinrichtung über dem zu markierenden Reifen axial und radial positioniert und gedreht. Der Drehwinkel wird vorteilhafterweise mittels einer Steuereinrichtung automatisch angepasst.

Von Vorteil ist das Vorsehen einer Schwenkvorrichtung zur senkrechten Ausrichtung in Bezug auf die Oberfläche des Reifens, um hierdurch ein gleichbleibend gutes Markierergebnis zu erreichen. Das wird insbesondere dann wichtig, wenn nicht nur die Seitenwand, sondern auch im Schulterbereich beziehungsweise der Lauffläche gelasert werden soll, wie es mitunter bei Flugzeugreifen notwendig ist, oder bei Reifen, die stark gewölbte Seitenwände haben, wie zum Beispiel sogenannte Off-the-Road (OTR)-Reifen.

Die erfindungsgemäße Vorrichtung ermöglicht die Markierung auch auf der Stirnseite des Wulstes, so dass die Markierung ausschließlich am nicht montierten Reifen zu sehen ist. Dies ist zum Beispiel beim Fleet-Management zur Verfolgung/Erfassung der Karkassen beim Rücklauf in die Runderneuerung notwendig.

Die Reifenkontur wird zweckmäßigerweise während des Beladevorgangs erfasst. Dazu wird beim Beladen über einen Punktsensor die Reifenkontur ermittelt. Der Sensor liefert die Höhewerte, und etwa ein Förderband ist mit einem Encoder ausgestattet, so dass über die beiden Werte die Kontur der Reifenoberseite ermittelt werden kann.

Da Reifen in der Regel symmetrisch sind, kann durch Spiegeln ein Reifenschnitt errechnet werden, um die Lasereinheit mit der Messeinrichtung relativ zum Reifen ausreichend genau zu positionieren. Diese Kontur kann auch zur Positionierung der Haltevorrichtung und zum Spreizen verwendet werden.

Erfindungsgemäß wird der Reifen über die Wülste geklammert (ergriffen), angehoben und gedreht. Hierfür wird die Haltevorrichtung verwendet.

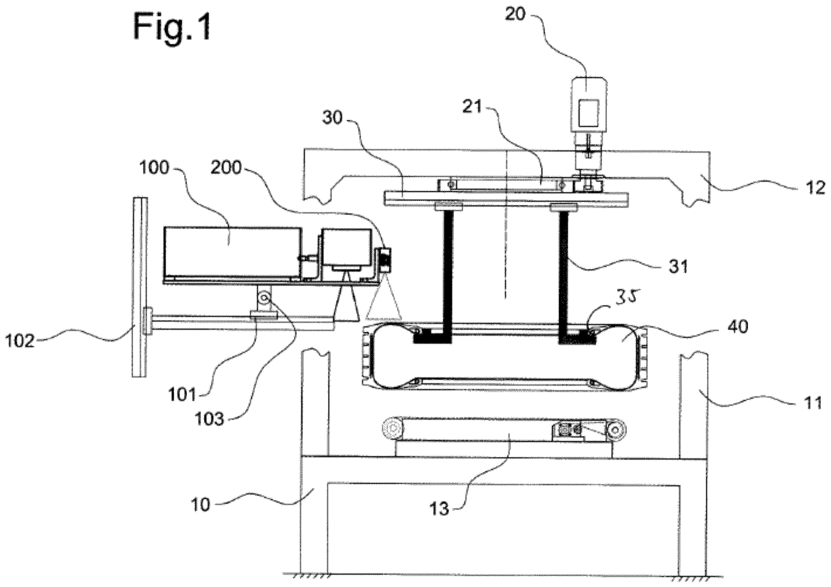

Die Lasereinrichtung und die Messeinrichtung werden zum Erfassen und Markieren der Seitenwand radial, axial und geschwenkt zur Reifenoberfläche positioniert, wie es insbesondere in Fig.1 dargestellt ist.

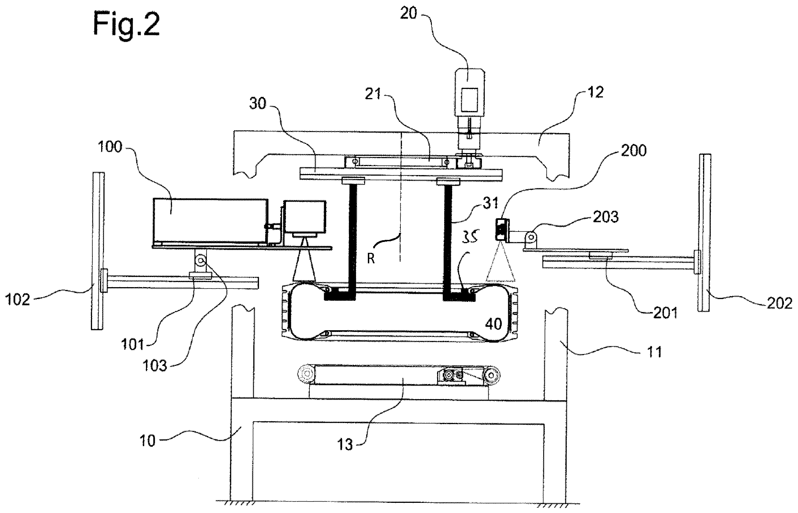

Die Lasereinrichtung und die Messeinrichtung sind dabei zweckmäßigerweise auf einer gemeinsamen Lineareinheit platziert, und die zwei Schritte, nämlich Erfassen oder Scannen einerseits und Lasern andererseits, werden nacheinander abgearbeitet. Alternativ können die Lasereinrichtung und die Messeinrichtung auf separaten Lineareinheiten angeordnet werden, um ein unabhängiges und damit vergleichsweise schnelles Vorpositionieren der jeweiligen Einheit zu realisieren. Eine derartige Ausgestaltung ist in Fig. 2 gezeigt.

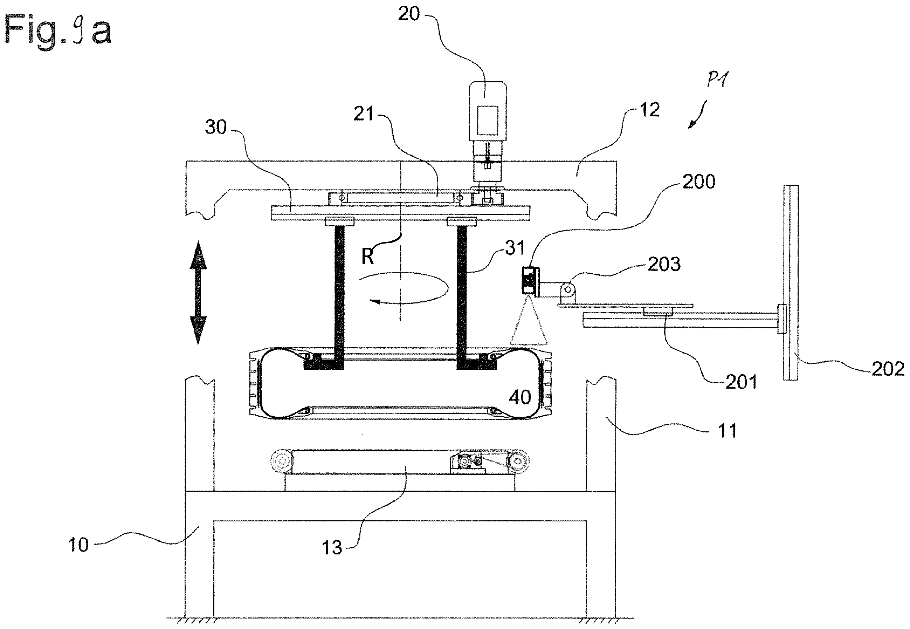

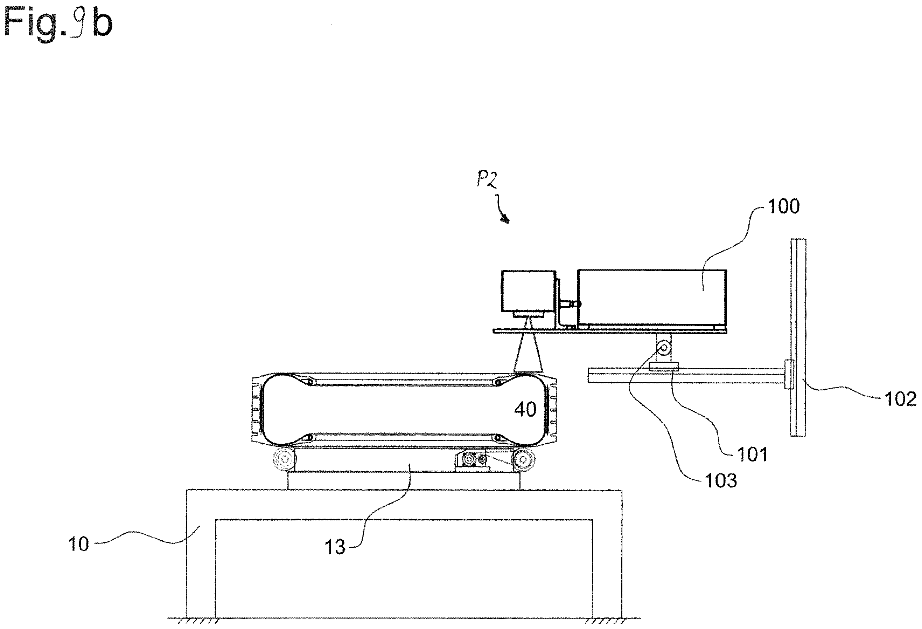

Üblicherweise werden die zu markierenden Reifen entlang einer Prozessrichtung, die auch als Beförderungsrichtung bezeichnet werden kann, durch die erfindungsgemäße Vorrichtung gefördert. Die Prozessrichtung folgt dem Aufbau der Vorrichtung und kann über den gesamten Verlauf geradlinig oder veränderlich sein. Dabei können gemäß einer Ausführungsform die Messeinrichtung an einer ersten Position und die Lasereinrichtung an einer zweiten Position angeordnet sein, die der ersten Position in der Prozessrichtung nachgelagert ist (zweigeteilter Aufbau). Ein solcher Aufbau ist den Fig. 9a bis 9c, 10 und 11 zu entnehmen.

Der Reifen kann zunächst an der ersten Position erfasst werden, während er, insbesondere durch die Haltevorrichtung, gedreht wird. Im Anschluss hieran wird er abgelegt und beispielsweise mittels eines Transportbands in die zweite Position gefördert oder direkt durch die Haltevorrichtung in der zweiten Position abgelegt. Das Ablegen erfolgt dabei vorzugsweise so, dass die zu markierende Stelle des Reifens für die Lasereinrichtung zugänglich ist. Dafür wird der Reifen vorzugsweise insbesondere so in Umfangsrichtung ausgerichtet, dass sich die zu markierende Stelle an der Seite befindet, an der die Lasereinrichtung angeordnet ist. Es ist besonders zweckmäßig, wenn der Reifen an der zweiten Position um seine Achse drehbar gelagert ist, beispielsweise mittels einer drehbaren Unterlage oder eines Transportbands oder einer weiteren Haltevorrichtung. Dabei ist es möglich, den Reifen an mehreren Stellen entlang seiner Seitenwand zu markieren.

Bei einem solchen zweigeteilten Aufbau ergibt sich ein vergleichsweise großer Durchsatz von Reifen, die mit der Vorrichtung markiert werden können, da bereits der nachfolgende Reifen in der ersten Position erfasst werden kann, während der vorhergehende Reifen in der zweiten Position markiert wird.

Alternativ zum zweigeteilten Aufbau können Messeinrichtung und Lasereinrichtung an einer gemeinsamen Position in der Prozessrichtung angeordnet sein, sodass der zu markierende Reifen nicht von der Messeinrichtung zur Lasereinrichtung gefördert werden muss. Vielmehr finden das Erfassen und das Markieren des Reifens in diesem Fall an der gemeinsamen Position statt, wodurch eine kompakte Ausgestaltung sichergestellt ist.

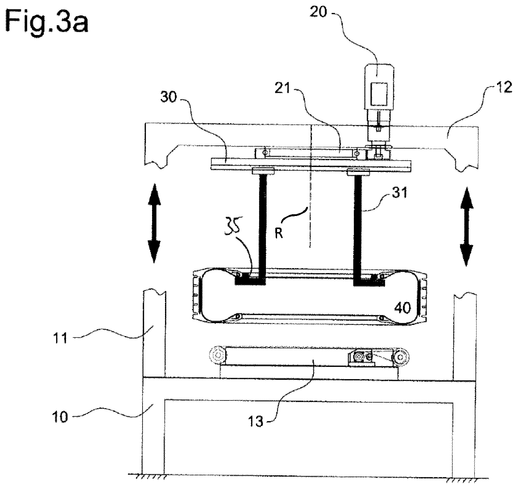

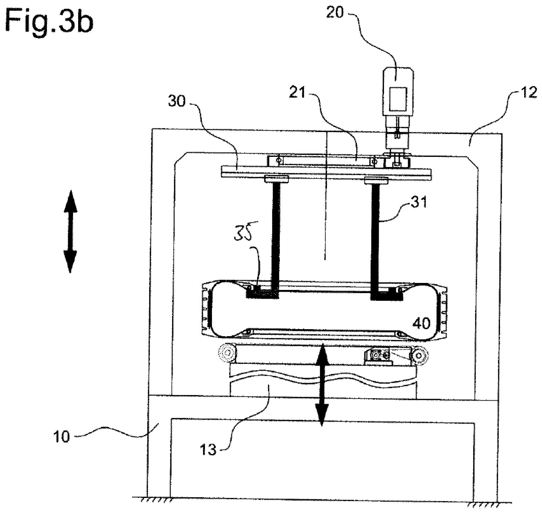

Zum Drehen des Reifens wird die Haltevorrichtung zusammen mit dem Reifen angehoben. Dies ist in Fig. 3a gezeigt. Alternativ wird das Transportband abgesenkt, wie es in Fig. 3b gezeigt ist.

Beim Ergreifen oder Klammern des Reifens wird dieser auch zentriert, damit der Reifen während der Drehung in dem in der Praxis limitierten Scan- und Markierbereich bleibt. Bei vergleichsweise breiten Reifen, wie insbesondere OTR-Reifen, kann die Seitenwand auch in mehreren Durchläufen gescannt werden. Zwischen den Durchläufen wird entsprechend neu positioniert, um den gesamten Bereich zu erfassen.

Beim Lasern kann auch in mehreren Umläufen markiert werden oder aber die entsprechenden Positionen direkt angefahren werden.

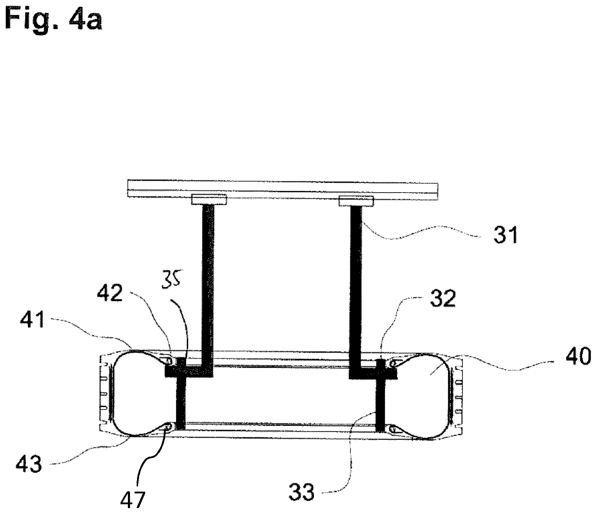

Vorteilhafterweise wird die untere Seitenwand fixiert, bevorzugt durch untere Reifenaufnahmen, damit sich die Seitenwand nicht bewegen kann. Die untere Reifenaufnahme kann beispielsweise eine Verlängerung der Reifenaufnahme für die obere Seitenwand, also der oberen Reifenaufnahme, sein, sodass diese nach unten, also zu der unteren Seitenwand hin, verlängert ist. Eine Bewegung der Seitenwand würde insbesondere beim Scannen/Digitalisieren der 3-D Kontur zu einer "Unschärfe" führen. Eine derartige Ausgestaltung ist in Fig. 4a gezeigt.

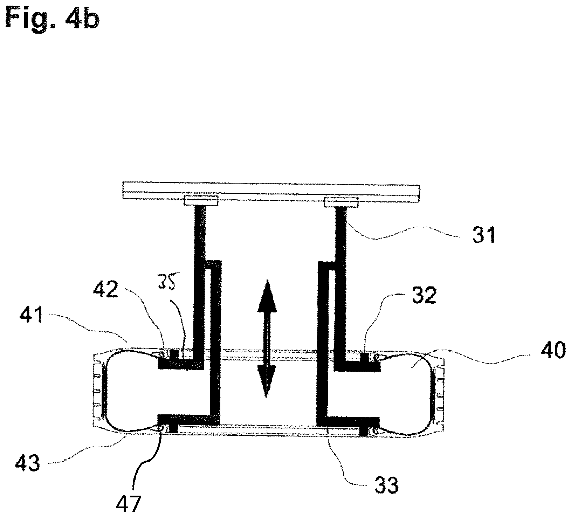

Vorteilhafterweise wird der Reifen gespreizt, damit die Seitenwände möglichst parallel zur Markierebene stehen, wie es in Fig. 4b gezeigt ist.

Zweckmäßigerweise sind die Lasereinrichtung und die Messeinrichtung auf ein und derselben Seite des Reifens angeordnet. Diese einseitige Anordnung ermöglicht eine einseitige Markierung, wie es in Fig. 1a gezeigt ist.

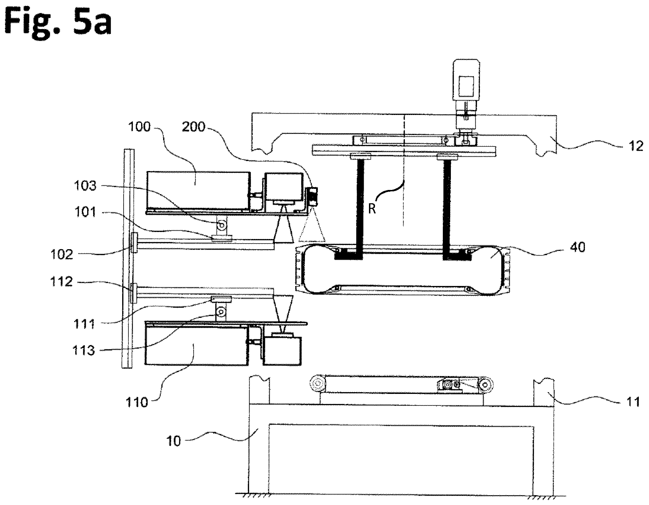

Bevorzugt ist jedoch eine Lasereinrichtung auf beiden Seiten des Reifens angeordnet, um insbesondere zeitgleich eine beidseitige Markierung zu ermöglichen, wie es in Fig. 5a gezeigt ist. Die Messeinrichtung kann in diesem Fall jedoch nur auf einer Seite des Reifens angeordnet sein, da eine einseitige Erkennung von Merkmalen des Reifens häufig aufgrund der Symmetrie, die Reifen üblicherweise haben, ausreichend ist.

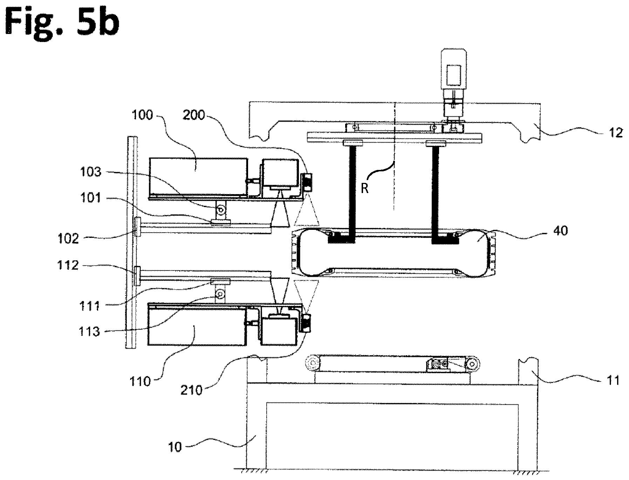

Weiterhin sind jedoch bevorzugt sowohl die Lasereinrichtung als auch die Messeinrichtung auf beiden Seiten des Reifens angeordnet, so dass eine beidseitige Markierung und eine unabhängige Erkennung von Merkmalen zur Positionierung auf beiden Seiten des Reifens sichergestellt ist, wie es in Fig. 5b gezeigt ist.

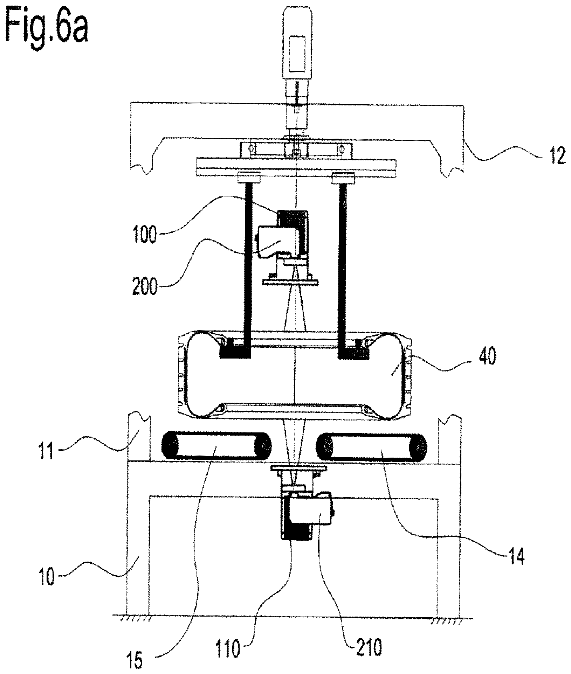

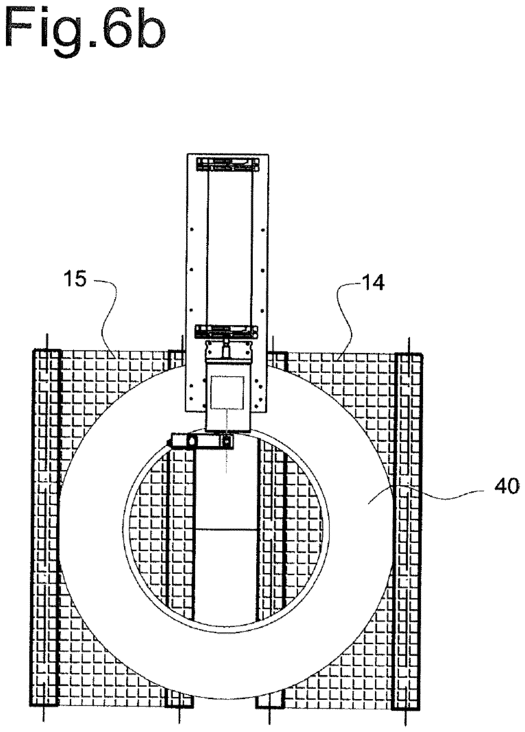

Vorteilhafterweise ist ein zweigeteiltes Transportband vorgesehen, um den Verfahrweg von Reifen beziehungsweise den des Transportbandes insbesondere bei zweiseitiger Markierung zu reduzieren. Eine derartige Ausgestaltung ist in den Fig. 6a und 6b gezeigt.

Bevorzugt wird die Reifenkontur gemessen durch die Erfassung der Reifenbreite und der Reifenposition beim Beladen. Die gemessene Reifenkontur dient zur Positionierung der Messeinrichtung.

Die Lasereinrichtung kann ebenfalls mit diesen Werten positioniert werden. Vorzugsweise wird die Lasereinrichtung aber mit Hilfe der sehr viel genaueren Position aus der Ermittlung des Markierbereichs relativ zur Reifenoberfläche positioniert, um eine präzise Markierung sicherzustellen.

Einzelheiten und weitere Vorteile der Erfindung ergeben sich aus der nachfolgenden Beschreibung von bevorzugten Ausführungsbeispielen. In den die Ausführungsbeispiele lediglich schematisch darstellenden Zeichnungen veranschaulichen im Einzelnen:
- Fig. 1: eine Seitenansicht von der erfindungsgemäßen Vorrichtung zum Markieren von Reifen, die einen zu markierenden Reifen im Querschnitt zeigt, in einer ersten Ausführungsform;
- Fig. 2: eine Seitenansicht von der erfindungsgemäßen Vorrichtung zum Markieren von Reifen, die einen zu markierenden Reifen im Querschnitt zeigt, in einer zweiten Ausführungsform;
- Fig. 3a: eine Seitenansicht von der erfindungsgemäßen Vorrichtung, die einen zu markierenden Reifen im Querschnitt zeigt und das Anheben einer Haltevorrichtung für den Reifen veranschaulicht;
- Fig. 3b: eine Seitenansicht von der erfindungsgemäßen Vorrichtung, die einen zu markierenden Reifen im Querschnitt zeigt und das Absenken eines Transportbands für den Reifen veranschaulicht;
- Fig. 4a: eine Seitenansicht von der erfindungsgemäßen Vorrichtung zum Markieren von Reifen, die einen zu markierenden Reifen im Querschnitt zeigt, in einer dritten Ausführungsform;
- Fig. 4b: eine Seitenansicht von der erfindungsgemäßen Vorrichtung zum Markieren von Reifen, die einen zu markierenden Reifen im Querschnitt zeigt, in einer vierten Ausführungsform;
- Fig. 4c: eine Seitenansicht von der erfindungsgemäßen Vorrichtung zum Markieren von Reifen, die einen zu markierenden Reifen im Querschnitt zeigt, in einer fünften Ausführungsform;
- Fig. 5a: eine Seitenansicht von der erfindungsgemäßen Vorrichtung zum Markieren von Reifen, die einen zu markierenden Reifen im Querschnitt zeigt, in einer sechsten Ausführungsform;
- Fig. 5b: eine Seitenansicht von der erfindungsgemäßen Vorrichtung zum Markieren von Reifen, die einen zu markierenden Reifen im Querschnitt zeigt, in einer siebten Ausführungsform;
- Fig. 6a: eine Seitenansicht von der erfindungsgemäßen Vorrichtung zum Markieren von Reifen, die einen zu markierenden Reifen und ein zweigeteiltes Transportband im Querschnitt zeigt, in einer achten Ausführungsform;
- Fig. 6b: eine Draufsicht auf die Ausführungsform gemäß Fig. 6a;
- Fig. 7: eine Seitenansicht von der erfindungsgemäßen Vorrichtung zum Markieren von Reifen, die einen zu markierenden Reifen im Querschnitt zeigt, in einer neunten Ausführungsform;
- Fig. 8: eine Seitenansicht von der erfindungsgemäßen Vorrichtung zum Markieren von Reifen, die einen zu markierenden Reifen im Querschnitt zeigt, in einer zehnten Ausführungsform;
- Fig. 9a: eine Seitenansicht von der erfindungsgemäßen Vorrichtung zum Markieren von Reifen, die einen zu markierenden Reifen im Querschnitt an einer ersten Position zeigt, in einer zehnten Ausführungsform;
- Fig. 9b: eine Seitenansicht von der Vorrichtung gemäß Fig. 9a in einer Variante, die einen zu markierenden Reifen im Querschnitt in einer zweiten Position zeigt;
- Fig. 9c: eine Seitenansicht von der Vorrichtung gemäß Fig. 9a in einer weiteren Variante, die einen zu markierenden Reifen im Querschnitt in einer zweiten Position zeigt;
- Fig. 10: eine Draufsicht auf die erste Position und eine Draufsicht auf die zweite Position der erfindungsgemäßen Vorrichtung zum Markieren von Reifen in einer elften Ausführungsform und
- Fig. 11: eine Draufsicht auf die erste Position und eine Draufsicht auf die zweite Position der erfindungsgemäßen Vorrichtung zum Markieren von Reifen in einer zwölften Ausführungsform.

Die in den Figuren gezeigten Ausführungsbeispiele der Vorrichtung haben gemein, dass mit ihnen ein zu markierender Reifen 40 an wenigstens einem seiner Wülste 42, 47 aufgenommen und gehalten werden kann, sodass ein aufwändiges Wenden des Reifens 40 entbehrlich wird. Somit wird eine schnelle und zuverlässige Kennzeichnung des Reifens 40 sichergestellt.

Wie die Fig. 1 bis 11 zu erkennen geben, werden die individuellen Markierungen oder Kennzeichnungen der Reifen 40 durch ein sogenanntes "Laserengraving" am neu hergestellten oder am runderneuerten Reifen 40 angebracht. Dieser Prozess erfolgt erfindungsgemäß vollautomatisch.

Die erfindungsgemäße Vorrichtung umfasst ein Maschinenuntergestell 10, auf dem ein Maschinenaufbau, bestehend aus einer festen Basis 11 und einem beweglichen Oberteil 12, sowie eine Fördereinrichtung 13 befestigt sind. Die Fördereinrichtung 13 ist zweckmäßigerweise als Transportband ausgebildet. Die Fördereinrichtung 13 kann optional aus zwei Teilen 14, 15 bestehen, wie in Fig. 6a, 6b, 10 und 11 dargestellt.

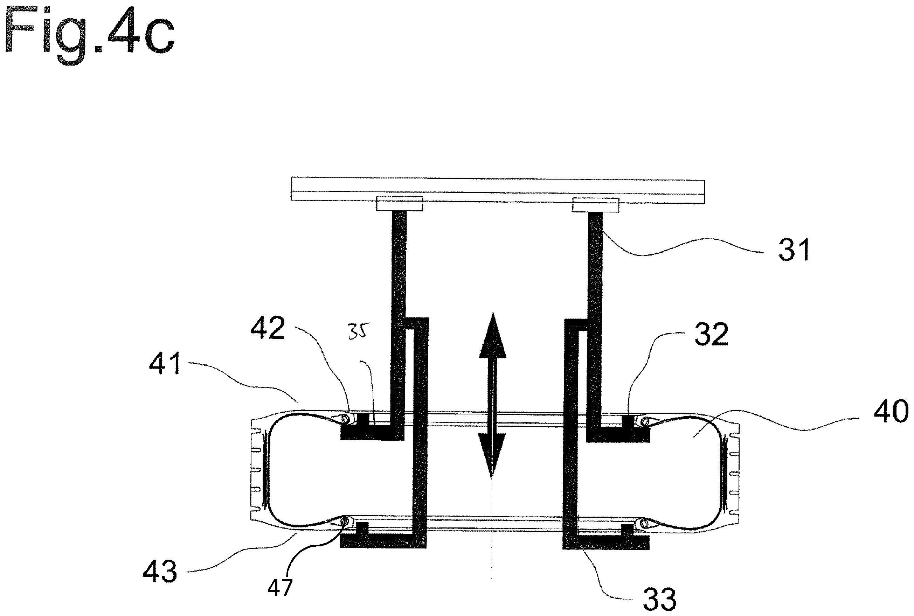

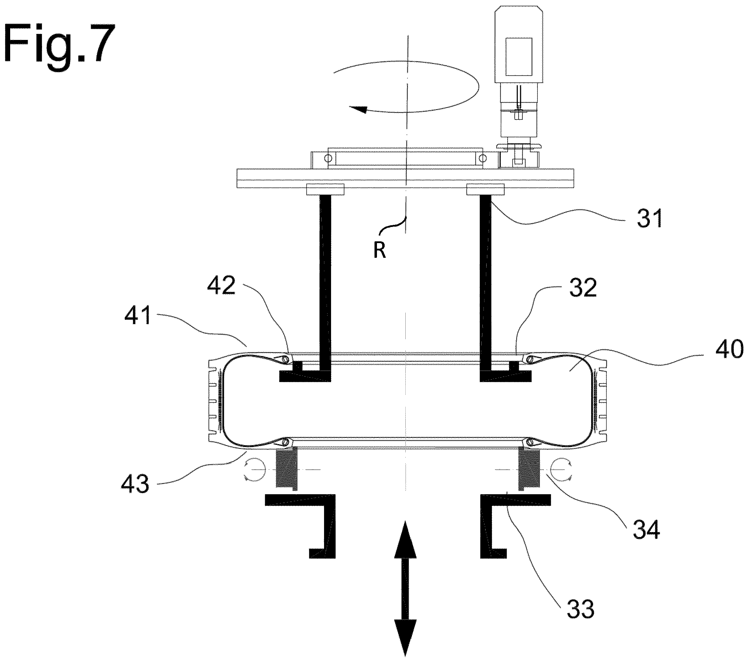

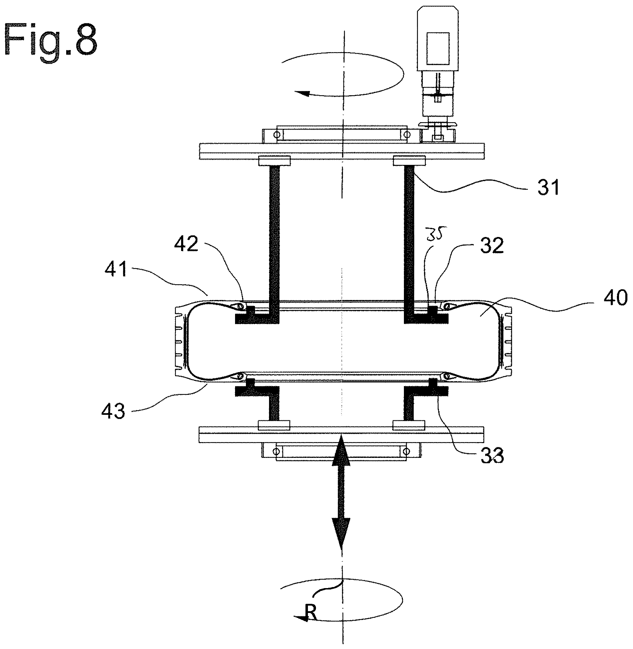

Des Weiteren umfasst die Vorrichtung eine Haltevorrichtung 31 zur Aufnahme und zum Halten des zu markierenden Reifens 40 an einem ersten Wulst 42 und/oder an einem zweiten Wulst 47. Die Haltevorrichtung 31 weist in den gezeigten Ausführungsbeispielen eine obere Reifenaufnahme 35 auf, welche an dem ersten Wulst 42 angreift und den Reifen 40 auf diese Weise hält. Optional weist die Haltevorrichtung 31 eine untere Reifenaufnahme 33 zum Fixieren des Reifens 40 auf, die beispielweise in Fig. 4a bis 4c gezeigt ist. Die untere Reifenaufnahme 33 kann, wie in Fig. 4a gezeigt, eine Verlängerung der oberen Reifenaufnahme 35 für den ersten Wulst 42 sein, sodass diese nach unten, also zu dem zweiten Wulst 47 hin, verlängert ist. Die untere Reifenaufnahme 33 kann entweder nur an den Innenseiten des Reifens 40 anliegen, ohne diesen zu stützen (Fig. 4a, 4b), oder sie kann eine Auflagefläche für den zweiten Wulst (47) ausbilden (Fig. 4c), auf welcher der Reifen 40 mit dem zweiten Wulst (47) aufliegt und sich abstützt. Sofern die untere Reifenaufnahme 33, wie in Fig. 7 und 8 gezeigt, nicht als Verlängerung der oberen Reifenaufnahme 35 ausgebildet ist, ist dafür Sorge zu tragen, dass sich beim Drehen des Reifens 40 mittels der oberen Reifenaufnahme 35 auch die untere Seitenwand 43 mit dreht. Zu diesem Zweck kann entweder, wie in Fig. 7 gezeigt, eine Abrolleinheit 34, beispielsweise drehbar gelagert Rollen, zwischen der unteren Seitenwand 43 und der unteren Reifenaufnahme 33 vorhanden sein, oder die untere Reifenaufnahme 33 kann, wie in Fig. 8 angedeutet, zum Erzeugen einer Drehung angetrieben werden, vorzugsweise synchron zu der oberen Reifenaufnahme 35. An der oberen Reifenaufnahme 35 und an der unteren Reifenaufnahme 33 können Zentrierungsanschläge 32 vorhanden sein, um den Reifen 40 radial zu zentrieren, wie beispielsweise in Fig. 4a, 4b gezeigt.

Zum Bewegen der Haltevorrichtung 31 und des von dieser gehaltenen Reifens 40 ist, wie insbesondere in Fig. 1 bis 3b gezeigt, eine radiale Verschiebeeinrichtung 30 und eine mit einem Drehantrieb 20 versehene Drehvorrichtung 21 vorhanden.

Die erfindungsgemäße Vorrichtung weist ferner eine Lasereinrichtung 100 und eine Messeinrichtung 200 auf. Wie insbesondere in Fig. 5a und 5b gezeigt, kann eine zweite, untere Lasereinrichtung 110 vorhanden sein, um je eine Lasereinrichtung 100, 110 auf beiden Seiten des Reifens 40 zu haben, sodass eine beidseitige, zeitgleiche Markierung des Reifens 40 möglich ist.

Die Lasereinrichtungen 100, 110 sind jeweils beweglich angeordnet, um präzise auf den zu markierenden Bereich 44 des Reifens 40 ausgerichtet zu werden, nämlich jeweils mittels einer radialen Verschiebeeinrichtung 101, 111, einer axialen Verschiebeeinrichtung 102, 112 und einer Schwenkeinrichtung 103, 113. In ähnlicher Weise ist die Messeinrichtung 200 mittels einer radialen Verschiebeeinrichtung 201, einer axialen Verschiebeeinrichtung 202 und einer Schwenkeinrichtung 203 beweglich angeordnet.

Die Messeinrichtung 200 und die Lasereinrichtung 100 können, wie die in Fig. 1 bis Fig. 8 gezeigten Ausführungsformen zeigen, an einer gemeinsamen Position in einer Prozessrichtung P, die auch als Förderrichtung bezeichnet werden kann, angeordnet sein. Der zu markierende Reifen 40 verbleibt in diesem Fall an derselben Position entlang der Prozessrichtung P, während er erfasst und markiert wird. Die Prozessrichtung P folgt dem konstruktiven Aufbau der Vorrichtung und kann über den gesamten Verlauf geradlinig oder auch veränderlich sein.

Alternativ dazu kann die Vorrichtung einen zweigeteilten Aufbau aufweisen, wie die Fig. 9a bis 9c, 10 und 11 zeigen. Der zweigeteilte Aufbau sieht vor, dass die Messeinrichtung 200 an einer ersten Position P1 angeordnet ist und die Lasereinrichtung 100 an einer zweiten Position P2 angeordnet ist. Die zweite Position P2 ist der ersten Position P1 in der Prozessrichtung P nachgelagert, das heißt mit anderen Worten, dass ein zu markierender Reifen 40, der die Vorrichtung durchläuft, zunächst an der ersten Position P1 und danach an der zweiten Position P2 ankommt.

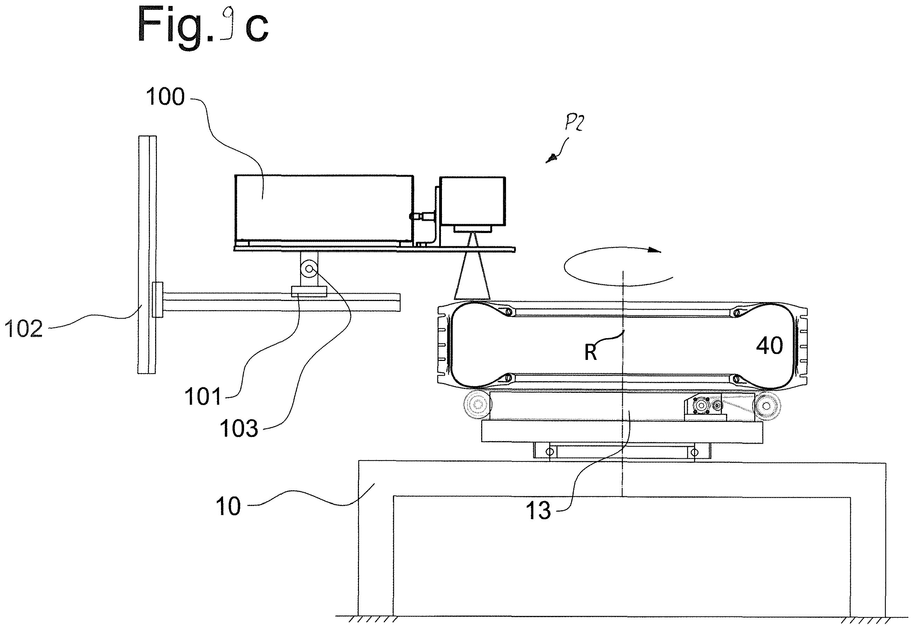

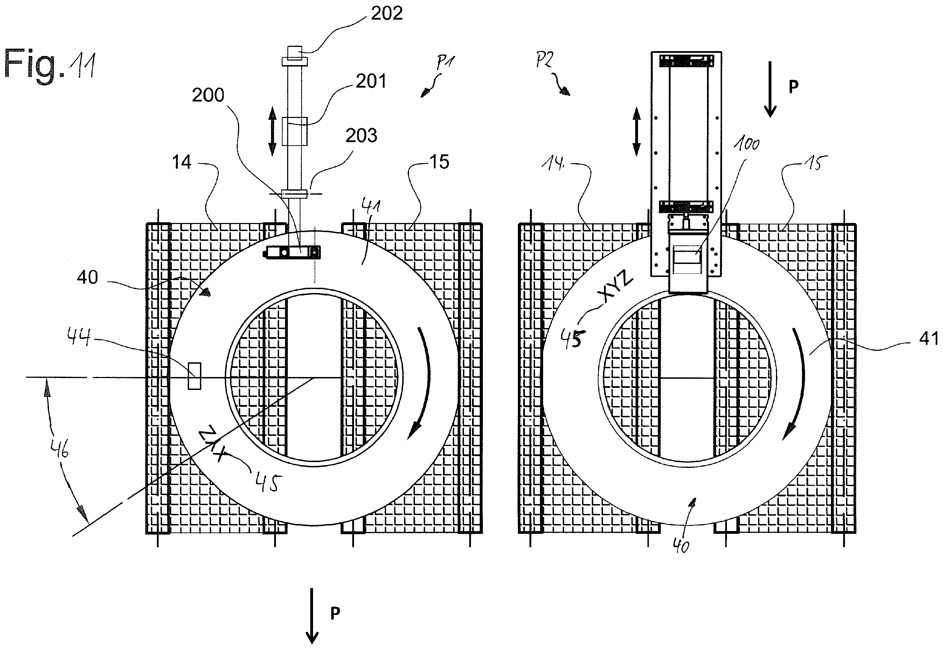

Der Reifen 40 wird zunächst in der ersten Position P1 erfasst und zu diesem Zweck von der Haltevorrichtung 31 gedreht. Anschließend wird der Reifen 40 abgelegt und mittels der Fördereinrichtung 13, vorzugsweise einem Transportband, zu der zweiten Position P2 gefördert. Wie in den Fig. 9c und 11 gezeigt, kann der Reifen 40 an der zweiten Position P2 um seine Rollachse R drehbar angeordnet sein, beispielsweise mittels einer drehbaren Unterlage oder eines drehbaren Transportbands 13. Die Drehbarkeit des Reifens 40 ermöglicht es, dass der Reifen 40 in der zweiten Position P2 an mehreren Stellen entlang seiner Seitenwand 41 markiert wird, indem der Reifen 40 jeweils so gedreht wird, dass die Markierbereiche 44 des Reifens 40 nacheinander im Arbeitsbereich der Lasereinrichtung 100 positioniert werden.

Alternativ zur Drehbarkeit des Reifens 40 kann der Reifen 40 so an der zweiten Position P2 abgelegt werden, dass die gegebenenfalls einzige zu markierende Stelle 44 des Reifens 40 für die Lasereinrichtung 100 zugänglich ist. Dafür wird der Reifen 40 so in Umfangsrichtung ausgerichtet, dass sich die zu markierende Stelle 44 nach dem Ablegen an der Seite ist, an der sich die Lasereinrichtung 100 befindet.

Der zweigeteilte Aufbau hat den Vorteil, dass der zu markierende Reifen 40 nach dem Erfassen oder Scannen von der ersten Position P1 zur zweiten Position P2 gefördert wird. Während er dort markiert wird, ist die erste Position P1 für den nachfolgenden Reifen 40 frei, sodass die beiden Prozessschritte Erfassen und Markieren für nachfolgende Reifen 40 parallel durchgeführt werden können.

Das erfindungsgemäße Verfahren wird bevorzugt mit Hilfe der erfindungsgemäßen Vorrichtung durchgeführt.

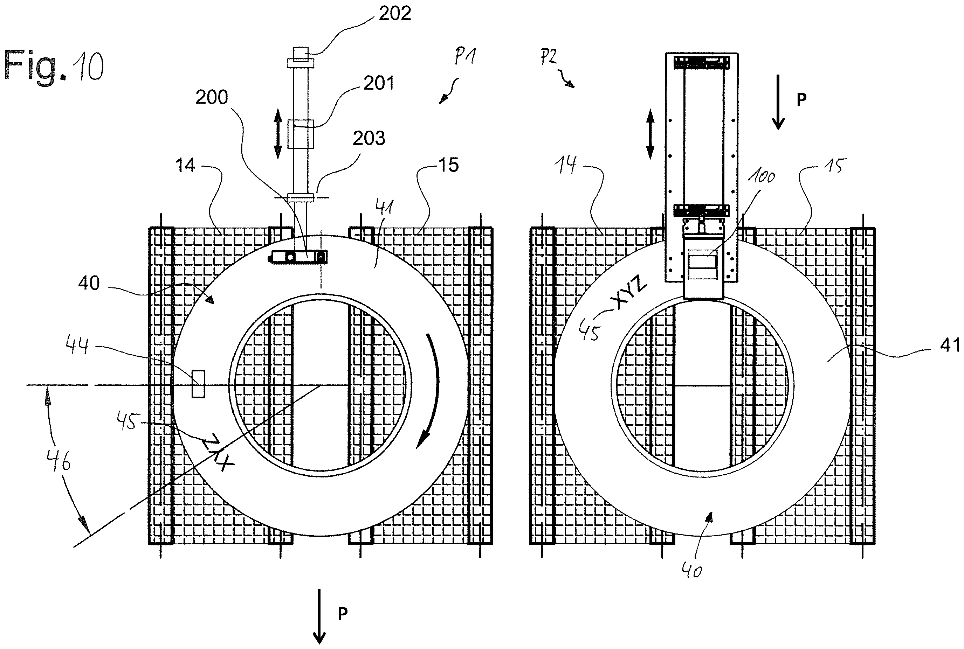

Die Reifendaten werden zusammen mit dem zu markierenden Reifen 40 übergeben. Die Lage der beispielsweise in den Fig. 10 und 11 ersichtlichen Markierfelder 44 relativ zu einem definierten Merkmal 45 ist in einer Datenbank hinterlegt. Die Merkmale 45 werden in einem manuellen Schritt eingelesen und reifenspezifisch, das heißt insbesondere von der Reifenform abhängig, in der Datenbank abgelegt. Die Zuordnung der spezifischen Markierung erfolgt insbesondere mittels eines optoelektronisch lesbaren Codes, etwa ein Barcode oder ein Matrixcode, oder, falls kein Code vorhanden ist, durch eine manuelle Auswahl des Settings für den jeweiligen Reifen 40.

Eine automatische Erkennung des spezifischen Merkmals 45, zum Beispiel ein Logo, auf dem Reifen 40 dient zur Positionierung der Lasereinrichtung 100 über dem oder den gewünschten Markierfeldern 44. Die Merkmale 45 auf der Seitenwand 41, 43 fußen auf einer reifenspezifischen Kennzeichnung, Logos usw. (Merkmale) und bewirken eine eindeutige Lage der Markierbereiche 44 relativ zu den Merkmalen 45, beispielsweise um einen Winkel 46. Die Geometrie / Koordinaten sind in der Regel bekannt, etwa aus der Zeichnung der Reifenform. Ein Reifen 40 lässt sich im Allgemeinen stets einer spezifischen Reifenform zuordnen.

Die Anforderungen an eine korrekte Markierung sind so, dass, selbst dann, wenn die Positionierung des Reifens 40 nur +/- 2 cm (beide Richtungen) genau erfolgt und/oder der Reifen 40 nicht 100 % rotationssymmetrisch beziehungsweise das Markierfeld nicht rotationssymmetrisch zur Reifengeometrie ist, die Markierung zentrisch im Feld sein muss. Um diese Anforderungen zu erfüllen, sieht das erfindungsgemäße Verfahren Folgendes vor:
Nach dem Positionieren einer Markiereinheit oder Lasereinrichtung 100, 110 über dem Markierbereich 44 wird das Feld nochmals erfasst, und die tatsächliche Lage wird ermittelt. So erfolgt eine symmetrische Ausrichtung des Laserbereichs zum tatsächlichen Markierfeld 44.

Zu diesem Zweck ist der Arbeitsbereich (Markierbereich) der Lasereinrichtung 100, 110 entsprechend größer als die maximale Feldgröße. Eine Korrektur wird mittels der zugehörigen Software durchgeführt.

Ein definierter Markierbereich 44 verlangt das Wissen um die tatsächliche Position des Markierfelds. Diese kann jedoch zur "Vorlage", also zum Beispiel ein sogenannter Masterreifen, variieren, etwa aufgrund der Positioniergenauigkeit der verwendeten Fördertechnik oder einer Abweichung der Reifenform von der Vorlage. Um die Forderung zu erfüllen, dass die Markierung nur geringen Toleranzen unterliegt, beispielsweise +/- 1 mm zentrisch im Markierfeld liegt, wird eine zweite Messung oder Auswertung der ersten Messung zur tatsächlichen Definition der Markierposition durchgeführt.

### Bezugszeichenliste

| | | | |
|---|---|---|---|
| 10 | Maschinenuntergestell | 46 | Winkel |
| 11 | Maschinenaufbau Basis (fest) | 47 | Reifenwulst |
| 12 | Maschinenaufbau Oberteil (beweglich) | 100 | Lasereinheit |
| 13 | Fördereinrichtung | 101 | radiale Verschiebeeinrichtung |
| 14 | Fördereinrichtung Teil 1 | 102 | axiale Verschiebeeinrichtung |
| 15 | Fördereinrichtung Teil 2 | 103 | Schwenkeinrichtung |
| 20 | Drehantrieb | 110 | Untere Lasereinheit |
| 21 | Drehvorrichtung | 111 | radiale Verschiebeeinrichtung |
| | | 112 | axiale Verschiebeeinrichtung |
| 30 | radiale Verschiebeeinrichtung | 113 | Schwenkeinrichtung |
| 31 | Haltevorrichtung | | |
| 32 | Anschlag zur Zentrierung | 200 | Messeinrichtung |
| 33 | untere Reifenaufnahme | 201 | radiale Verschiebeeinrichtung |
| 34 | Abrolleinheit | 202 | axiale Verschiebeeinrichtung |
| 35 | obere Reifenaufnahme | 203 | Schwenkeinrichtung |
| 40 | Reifen | P1 | erste Position |
| 41 | Obere Seitenwand | P2 | zweite Position |
| 42 | Reifenwulst | | |
| 43 | Untere Seitenwand | R | Rollachse |
| 44 | Markierbereich | P | Prozessrichtung |
| 45 | Merkmal | | |

## Patentansprüche

1. Vorrichtung zum Markieren von Reifen (40) mittels Laserstrahlen,
wobei die Reifen (40) eine Lauffläche, eine erste, in einer liegenden Position obere Seitenwand (41), die einen ersten Wulst (42) aufweist, eine zweite, in einer liegenden Position untere Seitenwand (43), die einen zweiten Wulst (47) aufweist, und eine Rollachse (R) haben und
wobei die Vorrichtung umfasst:
eine Lasereinrichtung (100, 110) zum Markieren des Reifens (40) mittels Laserstrahlen; und
eine Haltevorrichtung (31) zum Aufnehmen und zum Halten des zu markierenden Reifens (40) an dem ersten Wulst (42) und/oder an dem zweiten Wulst (47);
**gekennzeichnet durch** eine Messeinrichtung (200) zum Erfassen wenigstens einer der Seitenwände (41, 43) des Reifens (40);
wobei die Haltevorrichtung (31) ausgestaltet ist, in einer im Wesentlichen parallel zu der Rollachse (R) verlaufenden Richtung von oben in das Innere des Reifens (40) eingebracht und nach dem Ergreifen des Reifens (40) an dem ersten Wulst (42) und/oder an dem zweiten Wulst (47) derart angehoben zu werden, dass die erste Seitenwand (41) und die zweite Seitenwand (43) des Reifens (40) frei im Raum schwebend durch die Haltevorrichtung (31) gehalten werden und die Außenseiten der Seitenwände (41, 43) damit für die Markierung durch die Lasereinrichtung (100) frei zugänglich sind;
wobei die Haltevorrichtung (31) ausgestaltet ist, den angehobenen Reifen (40) zu drehen, und
wobei die Haltevorrichtung (31) ferner ausgestaltet ist, den Reifen (40) beim Ergreifen zugleich zu zentrieren.

2. Vorrichtung nach Anspruch 1, **gekennzeichnet durch** eine radiale Verschiebeeinrichtung (30) und eine mit einem Drehantrieb (20) versehene Drehvorrichtung (21) zum Bewegen der Haltevorrichtung (31).

3. Vorrichtung nach Anspruch 1 oder 2, **dadurch gekennzeichnet, dass** die Haltevorrichtung (31) eine obere Reifenaufnahme (35) zur Aufnahme des zu markierenden Reifens (40) an dem ersten Wulst (42) aufweist;
wobei die Haltevorrichtung (31) vorzugsweise eine untere Reifenaufnahme (33) zum Fixieren des Reifens (40) an der unteren Seitenwand (43) aufweist.

4. Vorrichtung nach einem der Ansprüche 1 bis 3, **gekennzeichnet durch** Zentrierungsanschläge (32) zum radialen Zentrieren des Reifens (40).

5. Vorrichtung nach einem der Ansprüche 1 bis 4, **dadurch gekennzeichnet, dass** die Lasereinrichtung (100) und/oder die Messeinrichtung (200) radial und/oder axial und/oder geschwenkt in Bezug auf die Oberfläche des Reifens (40) positionierbar sind.

6. Vorrichtung nach einem der Ansprüche 1 bis 5, **dadurch gekennzeichnet, dass** die Lasereinrichtung (100) und/oder die Messeinrichtung (200) auf einer gemeinsamen Verstelleinheit (101, 102, 103) oder auf separaten Verstelleinheiten (101, 102, 103; 201, 202, 203) angeordnet sind.

7. Vorrichtung nach einem der Ansprüche 1 bis 6, **dadurch gekennzeichnet, dass** die Messeinrichtung (200) an einer ersten Position (P1) angeordnet ist und die Lasereinrichtung (100) an einer zweiten Position (P2), die in einer Prozessrichtung (P) der ersten Position (P1) nachgelagert ist, angeordnet ist.

8. Vorrichtung nach einem der Ansprüche 1 bis 7, **gekennzeichnet durch** ein Transportband (13) zum Fördern des zu markierenden Reifens (40), das vorzugsweise zweigeteilt ist;
wobei vorzugsweise das Transportband (13) zum Drehen des zu markierenden Reifens (40) absenkbar ist.

9. Verfahren zum Markieren von Reifen (40) mittels einer Vorrichtung nach einem der Ansprüche 1 bis 8, **gekennzeichnet durch** folgende Verfahrensschritte:
der zu markierende Reifen (40) wird mittels der Haltevorrichtung (30) an dem ersten Wulst (42) und/oder an dem zweiten Wulst (47) ergriffen und dabei zugleich zentriert;
der zu markierende Reifen (40) wird mittels der Haltevorrichtung (30) derart angehoben, dass die erste Seitenwand (41) und die zweite Seitenwand (43) des Reifens (40) frei im Raum schwebend durch die Haltevorrichtung (31) gehalten werden;
der zu markierende Reifen (40) wird mittels der Haltevorrichtung (30) gedreht;
mittels der Messeinrichtung (200) wird die obere Seitenwand (41) und/oder die untere Seitenwand (43) zwei- oder dreidimensional erfasst und digitalisiert, um wenigstens ein spezifisches Merkmal (45), das an dem Reifen (40) vorhanden ist, zu ermitteln;
das Merkmal (45) wird als Referenz zur Positionierung der Lasereinrichtung (100, 110) in Bezug auf wenigstens einen Markierbereich (44) des Reifens (40) herangezogen;
der Reifen (40) wird in dem wenigstens einen Markierbereich (44) mittels der Lasereinrichtung (100) markiert.

10. Verfahren nach Anspruch 9, **dadurch gekennzeichnet, dass** die Kontur der Reifen (40) beim Beladen der Vorrichtung erfasst wird;
wobei vorzugsweise die Kontur der Reifen (40) zur Positionierung der Lasereinrichtung (100) und/oder der Messeinrichtung (200) und/oder der Haltevorrichtung (31) verwendet wird.

11. Verfahren nach Anspruch 9 oder 10, **dadurch gekennzeichnet, dass** die die obere Seitenwand (41) und/oder die untere Seitenwand (43) des zu markierenden Reifens (40) durch die Messeinrichtung (200) in mehreren Durchläufen erfasst werden;
wobei vorzugsweise zwischen den Durchläufen die Messeinrichtung (200) und/oder der Reifen (40) neu positioniert werden, um den Bereich vollständig zu erfassen.

12. Verfahren nach einem der Ansprüche 9 bis 11, **dadurch gekennzeichnet, dass** der Reifen (40) mittels der Lasereinrichtung (100) in mehreren Umläufen markiert wird;
wobei vorzugsweise die entsprechenden Markierbereiche (44) direkt angefahren werden.

13. Verfahren nach einem der Ansprüche 9 bis 12, **dadurch gekennzeichnet, dass** der Reifen (40) entlang einer Prozessrichtung (P) durch die Vorrichtung gefördert wird, wobei die obere Seitenwand (41) und/oder die untere Seitenwand (43) zunächst mittels der Messeinrichtung (200) in einer ersten Position (P1) erfasst und nachfolgend mittels der Lasereinrichtung (100) in einer zweiten Position (P2), die in der Prozessrichtung (P) der ersten Position (P1) nachgelagert ist, markiert werden.

14. Verfahren nach einem der Ansprüche 9 bis 13, **dadurch gekennzeichnet, dass** der Reifen (40) an der unteren Seitenwand (43) durch eine untere Reifenaufnahme (33) fixiert wird.

15. Verfahren nach einem der Ansprüche 9 bis 14, **dadurch gekennzeichnet, dass** der Reifen (40) gespreizt wird.

## Claims

1. A device for marking tyres (40) by means of laser beams,
said tyres (40) having a tread, a first, in a reclined position, upper sidewall (41) comprising a first bead (42), a second, in a reclined position, lower sidewall (43) comprising a second bead (47), and a rolling axle (R); and
the device comprising:
a laser device (100, 110) for marking the tyre (40) by means of laser beams; and
a holding device (31) for receiving and holding the tyre (40) to be marked on the first bead (42) and/or on the second bead (47);
**characterised by** a measuring device (200) for detecting at least one of the sidewalls (41, 43) of the tyre (40);
wherein the holding device (31) is designed to be inserted from above into the interior of the tyre (40) in a direction substantially parallel to the rolling axis (R) and to be lifted after gripping the tyre (40) at the first bead (42) and/or at the second bead (47) such that that the first sidewall (41) and the second sidewall (43) of the tyre (40) are held freely suspended in space by the holding device (31) and the outer sides of the sidewalls (41, 43) are thus freely accessible for marking by the laser device (100);
wherein the holding device (31) is configured to rotate the raised tyre (40), and
wherein the holding device (31) is further configured to simultaneously centre the tyre (40) when gripped.

2. The device according to claim 1, **characterised by** a radial displacement device (30) and a rotary device (21) provided with a rotary drive (20) for moving the holding device (31).

3. The device according to claim 1 or 2, **characterised in that** the holding device (31) comprises an upper tyre receiver (35) for receiving the tyre (40) to be marked on the first bead (42);
wherein the holding device (31) preferably comprises a lower tyre receiver (33) for fixing the tyre (40) to the lower side wall (43).

4. The device according to any one of claims 1 to 3, **characterised by** centring stops (32) for radially centring the tyre (40).

5. The device according to any one of claims 1 to 4, **characterised in that** the laser device (100) and/or the measuring device (200) can be positioned radially and/or axially and/or pivoted with respect to the surface of the tyre (40).

6. The device according to any one of claims 1 to 5, **characterised in that** the laser device (100) and/or the measuring device (200) are arranged on a common adjustment unit (101, 102, 103) or on separate adjustment units (101, 102, 103; 201, 202, 203).

7. The device according to any one of claims 1 to 6, **characterized in that** the measuring device (200) is arranged at a first position (P1) and the laser device (100) is arranged at a second position (P2) which is downstream of the first position (P1) in a process direction (P).

8. The device according to any one of claims 1 to 7, **characterised by** a conveyor belt (13) for conveying the tyre (40) to be marked, which is preferably divided in two;
wherein preferably the conveyor belt (13) can be lowered for rotating the tyre (40) to be marked.

9. A method of marking tyres (40) by means of the device according to any one of claims 1 to 8, **characterised by** the following method steps:
the tyre (40) to be marked is gripped by the holding device (30) on the first bead (42) and/or on the second bead (47) and is centred at the same time;
the tyre (40) to be marked is lifted by means of the holding device (30) in such a way that the first sidewall (41) and the second sidewall (43) of the tyre (40) are held freely suspended in space by the holding device (31);
the tyre (40) to be marked is rotated by means of the holding device (30);
by means of the measuring device (200), the upper sidewall (41) and/or the lower sidewall (43) is detected two- or three-dimensionally and digitised in order to determine at least one specific feature (45) present on the tyre (40);
the feature (45) is used as a reference for positioning the laser device (100, 110) with respect to at least one marking area (44) of the tyre (40);
the tyre (40) is marked in the at least one marking area (44) by means of the laser device (100).

10. The method according to claim 9, **characterised in that** the contour of the tyres (40) is detected during loading of the device;
wherein preferably the contour of the tyres (40) is used for positioning the laser device (100) and/or the measuring device (200) and/or the holding device (31).

11. The method according to claim 9 or 10, **characterized in that** the upper sidewall (41) and/or the lower sidewall (43) of the tyre (40) to be marked are detected by the measuring device (200) in several passes;
preferably repositioning the measuring device (200) and/or the tyre (40) between the passes to fully cover the area.

12. The method according to any one of claims 9 to 11, **characterised in that** the tyre (40) is marked by means of the laser device (100) in several revolutions;
whereby preferably the corresponding marking areas (44) are approached directly.

13. The method according to any one of claims 9 to 12, **characterized in that** the tyre (40) is conveyed through the device along a process direction (P), the upper sidewall (41) and/or the lower sidewall (43) first being detected by means of the measuring device (200) in a first position (P1) and subsequently being marked by means of the laser device (100) in a second position (P2) which is downstream of the first position (P1) in the process direction (P).

14. The method according to any one of claims 9 to 13, **characterised in that** the tyre (40) is fixed to the lower sidewall (43) by a lower tyre receiver (33).

15. The method according to any one of claims 9 to 14, **characterised in that** the tyre (40) is spread.

## Revendications

1. Dispositif de marquage de pneus (40) au moyen de rayons laser,
les pneus (40) ayant une bande de roulement, un premier flanc supérieur (41) dans une position couchée comprenant un premier talon (42), un second flanc inférieur (43) dans une position couchée comprenant un second talon (47), et un axe de roulement (R), et
le dispositif comprenant:
un dispositif laser (100, 110) pour marquer le pneu (40) au moyen de rayons laser; et
un dispositif de retenue (31) destiné à recevoir et à maintenir le pneu (40) à marquer sur le premier talon (42) et/ou sur le second talon (47);
**caractérisé par** un dispositif de mesure (200) pour détecter au moins l'un des flancs (41, 43) du pneu (40);
le dispositif de retenue (31) étant conçu pour être introduit par le haut à l'intérieur du pneu (40) dans une direction substantiellement parallèle à l'axe de roulement (R) et pour être soulevé après la saisie du pneu (40) au niveau du premier talon (42) et/ou du second talon (47) de telle sorte, que le premier flanc (41) et le second flanc (43) du pneu (40) sont maintenus en suspension libre dans l'espace par le dispositif de retenue (31) et que les côtés extérieurs des flancs (41, 43) sont ainsi librement accessibles pour le marquage par le dispositif laser (100);
dans lequel le dispositif de retenue (31) est configuré pour faire tourner le pneu (40) soulevé, et
le dispositif de retenue (31) étant en outre conçu pour centrer simultanément le pneu (40) lors de sa saisie.

2. Dispositif selon la revendication 1, **caractérisé par** un dispositif de déplacement radial (30) et un dispositif de rotation (21) pourvu d'un entra nement rotatif (20) pour déplacer le dispositif de retenue (31).

3. Dispositif selon la revendication 1 ou 2, **caractérisé en ce que** le dispositif de retenue (31) présente un logement de pneu supérieur (35) pour recevoir le pneu à marquer (40) sur le premier talon (42);
dans lequel le dispositif de retenue (31) comprend de préférence un logement de pneu inférieur (33) pour fixer le pneu (40) sur le flanc inférieure (43).

4. Dispositif selon l'une des revendications 1 à 3, **caractérisé par** des butées de centrage (32) pour centrer radialement le pneu (40).

5. Dispositif selon l'une des revendications 1 à 4, **caractérisé en ce que** le dispositif laser (100) et/ou le dispositif de mesure (200) peuvent être positionnés radialement et/ou axialement et/ou pivotés par rapport à la surface du pneu (40).

6. Dispositif selon l'une des revendications 1 à 5, **caractérisé en ce que** le dispositif laser (100) et/ou le dispositif de mesure (200) sont disposés sur une unité de réglage commune (101, 102, 103) ou sur des unités de réglage séparées (101, 102, 103; 201, 202, 203).

7. Dispositif selon l'une des revendications 1 à 6, **caractérisé en ce que** le dispositif de mesure (200) est disposé à une première position (P1) et le dispositif laser (100) est disposé à une second position (P2) qui est située en aval de la première position (P1) dans une direction de processus (P).

8. Dispositif selon l'une des revendications 1 à 7, **caractérisé par** une bande transporteuse (13) pour transporter le pneu (40) à marquer, qui est de préférence divisée en deux parties;
la bande transporteuse (13) pouvant de préférence être abaissée pour faire tourner le pneu (40) à marquer.

9. Procédé de marquage de pneus (40) au moyen d'un dispositif selon l'une des revendications 1 à 8, **caractérisé par** les étapes de procédé suivantes:
le pneu (40) à marquer est saisi au moyen du dispositif de retenue (30) au niveau du premier talon (42) et/ou du second talon (47), tout en étant centré;
le pneu (40) à marquer est soulevé au moyen du dispositif de retenue (30) de telle sorte que le premier flanc (41) et le second flanc (43) du pneu (40) sont maintenues en suspension libre dans l'espace par le dispositif de retenue (31);
le pneu (40) à marquer est tourné au moyen du dispositif de retenue (30);
au moyen du dispositif de mesure (200), le flanc supérieur (41) et/ou le flanc inférieur (43) est saisi en deux ou trois dimensions et numérisé afin de déterminer au moins une caractéristique spécifique (45) présente sur le pneu (40);
la caractéristique (45) est utilisée comme référence pour le positionnement du dispositif laser (100, 110) par rapport à au moins une zone de marquage (44) du pneu (40);
le pneu (40) est marqué dans la au moins une zone de marquage (44) au moyen du dispositif laser (100).

10. Procédé selon la revendication 9, **caractérisé en ce que** le contour des pneus (40) est détecté lors du chargement du dispositif;
le contour des pneus (40) étant de préférence utilisé pour positionner le dispositif laser (100) et/ou le dispositif de mesure (200) et/ou le dispositif de retenue (31).

11. Procédé selon la revendication 9 ou 10, **caractérisé en ce que** le flanc supérieur (41) et/ou le flanc inférieur (43) du pneu (40) à marquer sont détectés en plusieurs passages par le dispositif de mesure (200);
de préférence, entre les passages, le dispositif de mesure (200) et/ou le pneu (40) étant repositionnés afin de couvrir complètement la zone.

12. Procédé selon l'une des revendications 9 à 11, **caractérisé en ce que** le pneu (40) est marqué en plusieurs passages au moyen du dispositif laser (100);
en s'approchant de préférence directement des zones de marquage (44) correspondantes.

13. Procédé selon l'une des revendications 9 à 12, **caractérisé en ce que** le pneu (40) est transporté à travers le dispositif le long d'une direction de processus (P), le flanc supérieur (41) et/ou le flanc inférieur (43) étant d'abord détectés dans une première position (P1) au moyen du dispositif de mesure (200) et étant ensuite marqués au moyen du dispositif laser (100) dans une second position (P2) qui est située en aval de la première position (P1) dans la direction de processus (P).

14. Procédé selon l'une quelconque des revendications 9 à 13, **caractérisé en ce que** le pneu (40) est fixé sur le flanc inférieur (43) par un logement inférieur de pneu (33).

15. Procédé selon l'une quelconque des revendications 9 à 14, **caractérisé en ce que** le pneu (40) est écarté.
